# FASCICULE DE BREVET EUROPEEN

(11) **EP 0 988 167 B1**
(45) Date de publication et mention de la délivrance du brevet: **13.11.2002**
(21) Numéro de dépôt: 98930845.7
(22) Date de dépôt: 12.06.1998
(51) Int. Cl.: B60J 5/10

(54) **ENSEMBLE DE LUNETTE ARRIERE OUVRANTE POUR PORTE DE COFFRE DE VEHICULE AUTOMOBILE**
AUFKLAPPBARE HECKSCHEIBENEINHEIT FÜR DEN KOFFERRAUMDECKEL EINES FAHRZEUGES
OPENING REAR WINDOW ASSEMBLY FOR MOTOR VEHICLE BOOT DOOR

(30) Priorité: 16.06.1997 FR 9707437
(43) Date de publication de la demande: 29.03.2000
(73) Titulaire: Renault s.a.s., 92100 Boulogne Billancourt (FR)
(72) Inventeur: CORNEC, Georges, F-78200 Mantes la Jolie (FR); MADEC, Philippe, F-78200 Mantes la Jolie (FR)
(86) Numéro de dépôt international: FR9801230
(87) Numéro de publication internationale: WO98057816

(56) Documents cités:
- DE-A- 4 419 128
- FR-A- 2 684 347
- FR-A- 2 707 929
- FR-A- 2 721 556
- US-A- 2 422 912
- US-A- 4 722 206
- "LIFTGATE/LIFTGLASS HINGE" RESEARCH DISCLOSURE, no. 370, 1 février 1995, page 66 XP000504449

## Description

La présente invention se rapporte à un ensemble de lunette arrière ouvrante pour porte de coffre de véhicule automobile.

A l'heure actuelle, les portes de coffres ou hayons de véhicules automobiles comportent soit une vitre fixe non ouvrante, soit une vitre ouvrante. Dans ce dernier cas, comme proposé par exemple par la demande de brevet FR-A-2 707 929, des modifications par rapport à un véhicule à lunette arrière non ouvrante sont nécessaires, non seulement sur le hayon lui-même, mais également sur le pavillon du véhicule, en vue de l'adaptation de la lunette arrière ouvrante.

On connaît par le brevet US 4 722 206 une porte de coffre de véhicule avec une partie principale sur laquelle est articulée un panneau auxiliaire tel qu'une vitre. Le panneau auxiliaire est monté articulé sur la partie principale de la porte par l'intermédiaire de charnières pour fermer une ouverture ménagée dans ladite partie principale.

Or, pour des raisons de diversification et de coût, il serait désirable de pouvoir équiper les portes de coffres de véhicules d'un même type, en fonction des désirs des clients, au choix d'une lunette arrière non ouvrante ou d'une lunette arrière ouvrante, sans que cela implique des modifications sur la porte de coffre elle-même et à plus forte raison sur le pavillon du véhicule.

Selon l'invention, l'ensemble de lunette arrière ouvrante pour porte de coffre de véhicule automobile permet la réception d'une vitre articulée. Il est caractérisé par le fait qu'il consiste en une cassette comprenant un cadre périphérique de montage et une vitre ouvrante articulée sur ledit cadre, ladite cassette étant conçue pour pouvoir être montée sur la porte de coffre, dans une ouverture de ladite porte, en lieu et place d'une vitre non ouvrante, ladite cassette intégrant toutes les fonctions d'une lunette arrière ouvrante.

Une telle cassette peut en particulier être montée par collage sur la porte de coffre, tout comme une vitre non ouvrante, par un même robot qui effectue un parcours identique pour la pose d'un cordon de colle et pour la pose de la cassette et de la lunette fixe. La cassette dans son ensemble est livrée toute équipée au constructeur par le fournisseur.

De préférence, le cadre périphérique de la cassette porte des charnières, un joint d'étanchéité pour la vitre et une serrure, tandis que la vitre fixée auxdites charnières porte une gâche de serrure.

Pour faciliter l'ouverture de la vitre, la cassette peut avantageusement comporter, en outre, au moins un vérin d'ouverture, le cadre périphérique et la vitre comportant chacun au moins une rotule de fixation d'au moins un vérin d'ouverture de lunette.

Suivant un mode de réalisation préféré, le cadre périphérique de la cassette peut en outre comporter un moteur d'essuie-lunette et la vitre peut comporter un ensemble d'essuie-lunette comprenant un bras d'essuie-lunette et un axe d'entraînement de bras d'essuie-lunette conçu de manière à s'accoupler avec la sortie du moteur d'essuie-lunette du cadre périphérique, en position fermée de la vitre, et se désaccoupler dudit moteur lors de l'ouverture de la vitre.

De préférence, la gâche de serrure, l'axe d'entraînement d'essuie-lunette et le bras d'essuie-lunette peuvent être montés sur un support commun fixé sur la vitre.

Pour simplifier le montage de la cassette sur la porte de coffre, le cadre périphérique comporte avantageusement des moyens d'autocentrage coopérant avec des moyens complémentaires sur la porte de coffre.

Ces moyens d'autocentrage peuvent être constitués par exemple par deux piges d'autocentrage coopérant avec deux trous sur la porte de coffre.

De préférence, la cassette est montée sur un panneau extérieur de porte de coffre par collage (cordon de colle) du cadre périphérique dans un renfoncement de l'ouverture du panneau extérieur de porte de coffre.

En se référant aux dessins annexés, on va décrire ci-après plus en détail un mode de réalisation illustratif et non limitatif de l'ensemble de lunette arrière ouvrante conforme à l'invention; sur les dessins :
- la figure 1 représente un panneau extérieur de porte de coffre pouvant être équipé d'un ensemble de lunette arrière ouvrante conforme à l'invention;
- la figure 2 représente la cassette de lunette ouvrante en position fermée de la vitre;
- la figure 3 représente la cassette de la figure 2 en position ouverte de la vitre;
- la figure 4 est une coupe à plus grande échelle suivant A-A de la figure 3, montrant le montage de la cassette sur le panneau extérieur de porte de coffre.

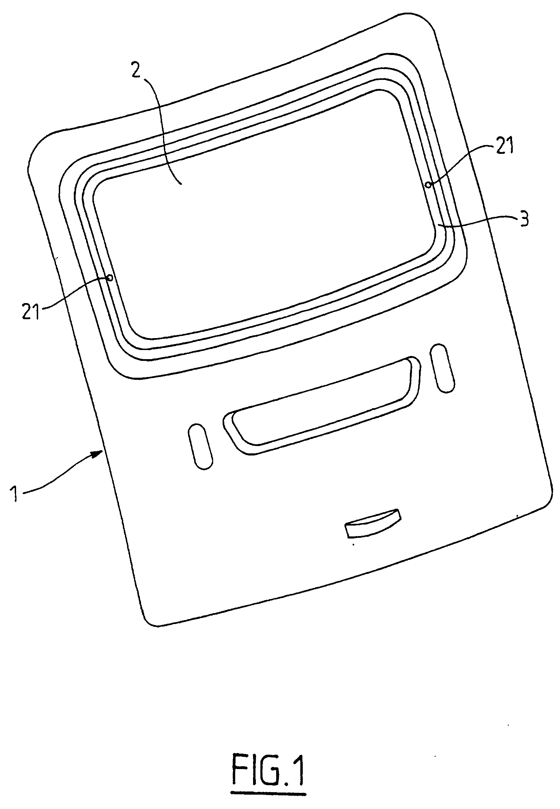

Le panneau extérieur de porte de coffre 1 illustré par la figure 1, comporte de façon connue en soi, dans sa partie supérieure, une ouverture 2 entourée par un renfoncement 3, cette ouverture pouvant être obturée de façon connue à l'aide d'une vitre non ouvrante, non représentée, fixée par exemple par collage dans le renfoncement 3.

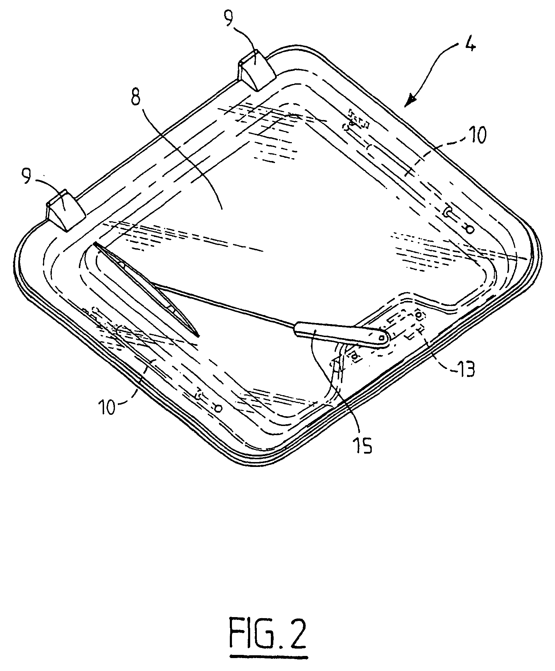

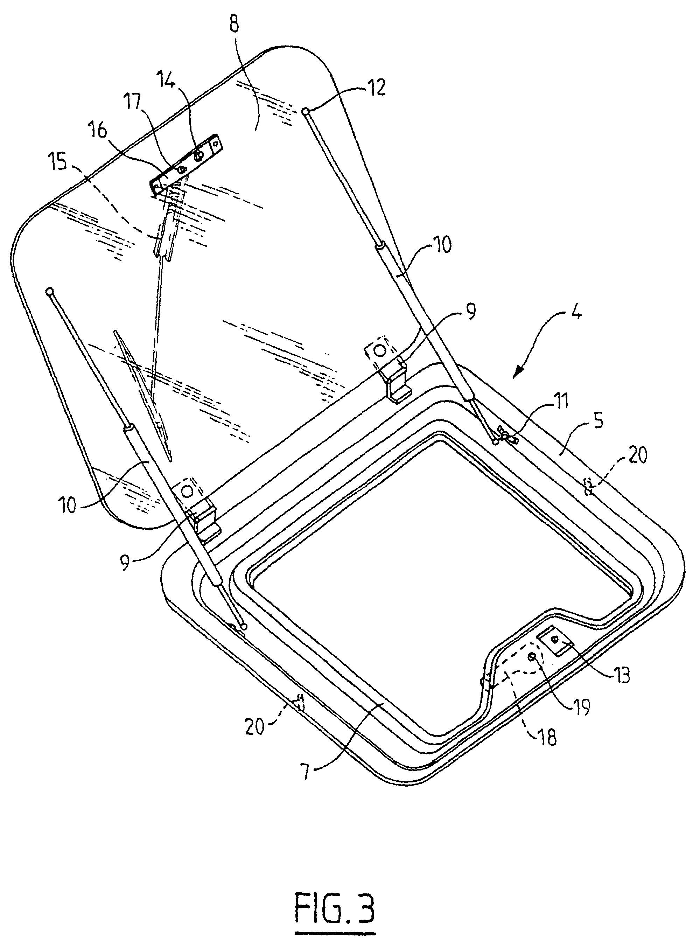

Pour pouvoir équiper un véhicule du même type au choix d'une lunette arrière non ouvrante et d'une lunette arrière ouvrante, la vitre non ouvrante peut être remplacée, au montage du véhicule, par une cassette 4 telle qu'illustrée par les figures 2 et 3.

La cassette 4 se compose d'un cadre périphérique 5 dimensionné et conformé de manière à pouvoir être monté dans le renfoncement 3 de l'ouverture 2 de la porte de coffre 1 en lieu et place d'une vitre non ouvrante, par exemple par collage.

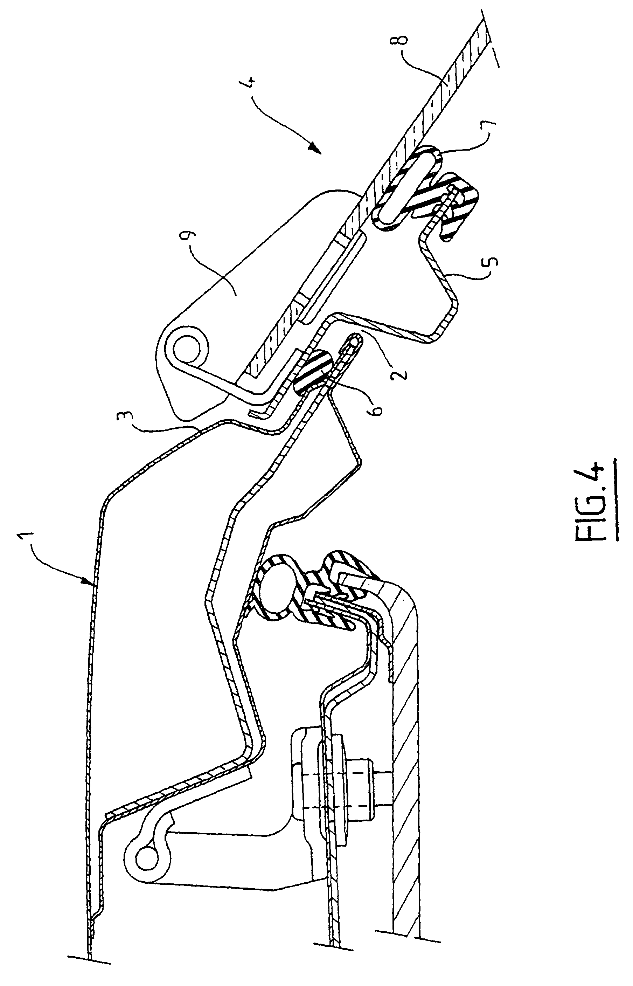

Sur la figure 4, on reconnaît que le cadre périphérique 5 présente un profil en V avec un rebord extérieur qui est fixé sur un bourrelet de colle 6 posé dans le renfoncement 3 de l'ouverture 2 du panneau extérieur de porte de coffre 1 et avec un rebord intérieur qui porte un joint d'étanchéité 7 périphérique.

Une vitre 8 est articulée sur le cadre 4 périphérique 5 par deux charnières 9 qui sont fixées, d'une part au rebord extérieur du cadre périphérique 5, en partie haute de l'ouverture 2, et, d'autre part à la vitre 8, au voisinage du bord supérieur de cette dernière, de manière que lorsque la vitre 8 se trouve en position fermée, suivant la figure 4, elle écrase le joint périphérique 7, ce qui assure l'étanchéité entre la vitre 8 et le cadre périphérique 5.

Deux vérins hydrauliques 10 d'ouverture sont articulés par une rotule 11 sur le cadre périphérique 5 et par une rotule 12 sur la vitre 8, de telle manière qu'en position fermée de la vitre 8 (voir figure 2), les vérins 10 se trouvent placés sur les deux côtés latéraux du cadre 5 dans le renfoncement en V du cadre périphérique 5.

Pour le maintien de la vitre 8 en position fermée, une serrure 13 est disposée sur le cadre périphérique 5, en partie basse de ce dernier, et une gâche de serrure 14 est montée sur la vitre 8.

La vitre 8 est par ailleurs équipée d'un bras d'essuie-lunette 15 monté, tout comme la gâche de serrure 14, sur un support 16. Un axe d'entraînement 17 d'essuie-lunette fait saillie sur ce support 16, dans le même sens que la gâche 14.

Pour l'entraînement de l'essuie-lunette, le cadre périphérique 5 porte un moteur d'essuie-lunette 18 dont la sortie 19 est positionnée de manière à assurer automatiquement l'accouplement avec l'axe 17 lors de la fermeture de la vitre 8 dans la position suivant la figure 2 et le désaccouplement lors de l'ouverture de la vitre 8.

Le cadre périphérique 5 de la cassette 4 comporte par ailleurs, sur son rebord extérieur, deux piges de centrage 20 (voir figure 3) qui, lors du montage de la cassette dans l'ouverture 2 du panneau de porte de coffre 1, par exemple par robot, assurent l'autocentrage de la cassette en venant coopérer avec deux trous 21 prévus dans le renfoncement 3 de l'ouverture 2 du panneau extérieur de porte de coffre 1.

## Revendications

1. Ensemble de lunette arrière ouvrante pour porte de coffre de véhicule automobile permettant la réception d'une vitre articulée, **caractérisé par le fait qu'**il consiste en une cassette (4) comprenant un cadre périphérique de montage (5) et une vitre ouvrante (8) articulée sur ledit cadre, ladite cassette étant conçue pour pouvoir être montée sur la porte de coffre (1), dans une ouverture (2) de ladite porte (1), en lieu et place d'une vitre non ouvrante, ladite cassette intégrant toutes les fonctions d'une lunette arrière ouvrante.

2. Ensemble suivant la revendication 1, **caractérisé par le fait que** le cadre périphérique (5) porte des charnières (9), un joint d'étanchéité (7) pour la vitre (8) et une serrure (13), et que la vitre (8) fixée auxdites charnières (9) porte une gâche de serrure (14).

3. Ensemble suivant la revendication 1 ou 2, **caractérisé par le fait que** la cassette comporte, en outre, au moins un vérin d'ouverture (10) et que le cadre périphérique (5) et la vitre (8) comportent chacun au moins une rotule (11, 12) pour la fixation du vérin d'ouverture de l'unette.

4. Ensemble suivant l'une quelconque des revendications précédentes, **caractérisé par le fait que** le cadre périphérique (5) comporte, en outre, un moteur d'essuie-lunette (18) et que la vitre (8) comporte un ensemble d'essuie-lunette comprenant un bras d'essuie-lunette (15) et un axe d'entraînement (17) de bras d'essuie-lunette conçu de manière à s'accoupler avec la sortie (19) du moteur d'essuie-lunette (18) en position fermée de la vitre et se désaccoupler du moteur d'essuie-lunette lors de l'ouverture de la vitre.

5. Ensemble suivant la revendication 4, **caractérisé par le fait que** la gâche de serrure (14), l'axe d'entraînement (17) d'essuie-lunette et le bras d'essuie-lunette (15) sont montés sur un support (16) commun fixé sur la vitre (8).

6. Ensemble suivant l'une quelconque des revendications précédentes, **caractérisé par le fait que** le cadre périphérique (5) comporte des moyens d'autocentrage (20) coopérant avec des moyens complémentaires (21) sur la porte de coffre (1).

7. Ensemble suivant la revendication 6, **caractérisé par le fait que** les moyens d'autocentrage sont constitués par des piges (20) sur le cadre périphérique (5), coopérant avec des trous (21) dans le panneau extérieur de porte de coffre (1).

8. Ensemble suivant l'une quelconque des revendications précédentes, **caractérisé par le fait que** la cassette est montée sur un panneau extérieur de porte de coffre (1) par collage (cordon de colle 6) du cadre périphérique (5) dans un renfoncement (3) de l'ouverture (2) du panneau extérieur de porte de coffre (1).

## Patentansprüche

1. Sich öffnende Heckscheibeneinheit für eine Kofferraumtür eines Kraftfahrzeugs, die die Aufnahme einer angelenkten Scheibe ermöglicht, **dadurch gekennzeichnet, dass** sie aus einer Kassette (4) besteht, umfassend einen peripheren Rahmen (5) zur Montage und eine sich öffnende Scheibe (8), die an dem Rahmen angelenkt ist, wobei die Kassette so konzipiert ist, dass sie an der Kofferraumtür (1) in einer Öffnung (2) der Tür (1) an Stelle einer sich nicht öffnenden Scheibe montiert werden kann, wobei die Kassette alle Funktionen einer sich öffnenden Heckscheibe integriert.

2. Einheit nach Anspruch 1, **dadurch gekennzeichnet, dass** der periphere Rahmen (5) Scharniere (9), eine Dichtung (7) für die Scheibe (8) und ein Schloss (13) trägt und dass die Scheibe (8), die an den Scharnieren (9) befestigt ist, einen Schließkeil (14) trägt.

3. Einheit nach Anspruch 1 oder 2, **dadurch gekennzeichnet, dass** die Kassette darüber hinaus mindestens einen Zylinder zur Öffnung (10) umfasst und dass der periphere Rahmen (5) und die Scheibe (8) jeweils mindestens ein Kugelgelenk (11, 12) zur Befestigung des Zylinders zur Öffnung der Heckscheibe umfassen.

4. Einheit nach einem der vorhergehenden Ansprüche, **dadurch gekennzeichnet, dass** der periphere Rahmen (5) darüber hinaus einen Scheibenwischermotor (13) umfasst und dass die Scheibe (8) eine Scheibenwischereinheit umfasst, umfassend einen Scheibenwischerarm (15) und eine Antriebsachse (17) für den Scheibenwischerarm, die so konzipiert ist, dass sie in geschlossener Position der Scheibe mit dem Ausgang (19) des Scheibenwischermotors (18) gekoppelt und bei der Öffnung der Scheibe von dem Motor entkoppelt wird.

5. Einheit nach Anspruch 4, **dadurch gekennzeichnet, dass** der Schließkeil (14), die Antriebsachse (17) des Scheibenwischers und der Scheibenwischerarm (15) auf einer gemeinsamen Halterung (16) montiert sind, die an der Scheibe (8) befestigt ist.

6. Einheit nach einem der vorhergehenden Ansprüche, **dadurch gekennzeichnet, dass** der periphere Rahmen (5) Mittel zum Selbstzentrieren (20) umfasst, die mit komplementären Mitteln (21) an der Kofferraumtür (1) zusammenarbeiten.

7. Einheit nach Anspruch 6, **dadurch gekennzeichnet, dass** die Mittel zum Selbstzentrieren durch zwei Stifte (20) am peripheren Rahmen (5) gebildet sind, die mit Löchern (21) im Außenblech der Kofferraumtür (1) zusammenarbeiten.

8. Einheit nach einem der vorhergehenden Ansprüche, **dadurch gekennzeichnet, dass** die Kassette an einem Außenblech der Kofferraumtür (1) durch Kleben (Klebstoffwulst 6) des peripheren Rahmens (5) in einen Rücksprung (3) der Öffnung (2) des Außenblechs der Kofferraumtür (1) montiert wird.

## Claims

1. Opening rear screen assembly for the tailgate of an automotive vehicle allowing an articulated window to be received, **characterised by** the fact that it consists of a cassette (4) comprising a peripheral mounting frame (5) and an opening window (8) articulated on said frame, said cassette being designed to be able to be mounted on the tailgate (1) in an aperture (2) of said tailgate (1) instead of and in the place of a non-opening window, said cassette integrating all the functions of an opening rear screen.

2. Assembly according to claim 1, **characterised by** the fact that the peripheral frame (5) carries hinges (9), a seal (7) for the window (8) and a locking mechanism (13), and that the window (8) fixed to said hinges (9) carries a lock striking plate (14).

3. Assembly according to claim 1 or 2, **characterised by** the fact that the cassette comprises, inter alia, at least one opening jack (10), and that that peripheral frame (5) and the window (8) each comprise at least one ball joint (11, 12) for fixing of the opening jack for the screen.

4. Assembly according to any one of the preceding claims, **characterised by** the fact that the peripheral frame (5) comprises, inter alia, a windscreen wiper motor (18) and that the window (8) comprises a windscreen wiper assembly comprising a windscreen wiper arm (15) and a drive axle (17) for the windscreen wiper arm designed such as to couple with the output (19) of the windscreen wiper motor (18) when the window is in the closed position, and to uncouple from the windscreen wiper motor when the window is opened.

5. Assembly according to claim 4, **characterised by** the fact that the lock striking plate (14), the drive axle (17) for the windscreen wiper, and the windscreen wiper arm (15) are mounted on a common support (16) fixed to the window (8).

6. Assembly according to any one of the preceding claims, **characterised by** the fact that the peripheral frame (5) comprises automatic centring means (20) cooperating with complementary means (21) on the tailgate (1).

7. Assembly according to claim 6, **characterised by** the fact that the automatic centring means are constituted by two rods (20) on the peripheral frame (5) cooperating with holes (21) in the exterior panel of the tailgate (1).

8. Assembly according to any one of the preceding claims, **characterised by** the fact that the cassette is mounted on an external panel of the tailgate (1) by gluing (glue band 6) the peripheral frame (5) into a recess (3) in the aperture (2) in the exterior panel of the tailgate (1).
